# EUROPÄISCHE PATENTSCHRIFT

(11) **EP 3 724 555 B1**
(45) Veröffentlichungstag und Bekanntmachung des Hinweises auf die Patenterteilung: **28.08.2024**
(21) Anmeldenummer: 18829303.9
(22) Anmeldetag: 17.12.2018
(51) Int. Cl.: F24F 13/20, F24F 13/22, F24F 12/00, F24F 13/30

(54) **LÜFTUNGSGERÄT UND VERFAHREN ZU DESSEN MONTAGE UND DEMONTAGE**
VENTILATION DEVICE AND METHOD OF MOUNTING AND DISASSEMBLING THE SAME
DISPOSITIF DE VENTILATION ET SON PROCÉDÉ D'ASSEMBLAGE ET DÉMONTAGE DU MÊME

(30) Priorität: 15.12.2017 DE 102017011635; 15.12.2017 DE 102017011633
(43) Veröffentlichungstag der Anmeldung: 21.10.2020
(73) Patentinhaber: Stiebel Eltron GmbH & Co. KG, 37603 Holzminden (DE)
(72) Erfinder: NEUGEBAUER, Johannes, 33609 Bielefeld (DE); SMOLLICH, Steffen, 37603 Holzminden (DE)
(86) Internationale Anmeldenummer: PCT/EP2018/085275
(87) Internationale Veröffentlichungsnummer: WO 2019/115827

(56) Entgegenhaltungen:
- EP-A1- 2 426 425
- WO-A1-2012/140861
- WO-A1-2016/194261
- DE-A1- 10 013 689
- DE-A1- 19 807 262
- DE-U1- 202004 005 905
- DE-U1- 202013 002 010
- US-A- 5 217 269
- US-A1- 2010 136 896

## Beschreibung

Die vorliegende Erfindung bezieht sich auf ein Lüftungsgerät und ein entsprechendes Montage- und Demontageverfahren.

Lüftungsgeräte sind im Stand der Technik bekannt und dienen beispielsweise dazu, die Zuluft und Abluft zu Räumen in Gebäuden zu steuern. Ferner werden die Lüftungsgeräte eingesetzt, um eine Wärmerückgewinnung zu ermöglichen, indem Teile der in der Abluft enthaltenen Wärmeenergie auf die Frischluft übertragen werden. Dazu weisen die Lüftungsgeräte üblicherweise einen Wärmeübertrager auf.

Lüftungsgeräte müssen regelmäßig gewartet werden, damit eine dauerhafte und effektive Funktionsweise des Lüftungsgeräts garantiert werden kann. Bei der Wartung ist es häufig notwendig, ein oder mehrere Geräte-Komponenten des Lüftungsgeräts zu entnehmen, zu reinigen und wieder einzusetzen oder bei Bedarf auszutauschen.

Bekannte Vorrichtungen sind beispielsweise aus DE 100 13 689 A1, EP 2 426 425 A1, DE 198 07 262 A1, WO 2012/140861 A1 und US 2010/0136896 A1 bekannt.

An aus dem Stand der Technik bekannten Lüftungsgeräten ist ein Austausch der einzelnen Geräte-Komponenten der bereits bekannten Lüftungsgeräte meist aufwendig. Oft können nur wenige Teile ohne großen Aufwand bei der Demontage entnommen werden. Dies liegt oft auch an dem vergleichsweise komplizierten Aufbau und/oder der Anordnung der einzelnen Geräte-Komponenten in bereits bekannten Lüftungsgeräten.

Ein problemloser, schneller und funktionserhaltender Austausch der einzelnen Geräte-Komponenten, insbesondere eines Wärmeübertragers, Luftfilters oder einer Kondensatpumpe an einem Lüftungsgerät, stellt eine primäre Anforderung an den technischen Aufbau des Lüftungsgeräts dar. Insbesondere ein modularer Aufbau eines Lüftungsgeräts, der es ermöglicht, den Wärmeübertrager und insbesondere jede einzelne Geräte-Komponente des Lüftungsgerätes problemlos, schnell und funktionserhaltend auszutauschen, war daher eine primäre Aufgabe.

Bei dem Austausch eines Bestandteils des Lüftungsgeräts, insbesondere des Wärmeübertragers, soll die Dichtigkeit des Lüftungsgeräts und auch des Wärmeübertragers nicht verschlechtert werden.

Zudem war es auch eine Aufgabe, die einzelnen Bestandteile des Lüftungsgeräts möglichst platzsparend anzuordnen.

Zudem war es auch eine Aufgabe, die einzelnen Geräte-Komponenten des Lüftungsgeräts möglichst effizient und platzsparend im Lüftungsgerät anzuordnen.

Gemäß einem ersten Aspekt der Erfindung wird die zugrunde liegende Aufgabe mit einem Lüftungsgerät mit den Merkmalen nach Anspruch 1 gelöst.

Gemäß einem weiteren Aspekt der Erfindung wird ein Montageverfahren mit den Merkmalen von Anspruch 8 vorgeschlagen.

Gemäß einem weiteren Aspekt der Erfindung wird ein Demontageverfahren mit den Merkmalen von Anspruch 9 vorgeschlagen.

Bevorzugte Ausführungsformen des Lüftungsgerätes sind in den abhängigen Ansprüchen 2-7 definiert.

Insbesondere ist an dem Lüftungsgerät ein Gehäuse, das bevorzugt zwei EPS-Schalen aufweist, ein Innenraum-Frischluftanschluss und ein Innenraum-Abluftanschluss, welche, bezogen auf eine Längsrichtung des Lüftungsgerätes, beide auf einer Seite angeordnet sind sowie ein Außenraum-Frischluftanschluss und ein Außenraum-Abluftanschluss, welche bezogen auf die Längsrichtung des Lüftungsgerätes, beide auf der gegenüberliegenden Seite angeordnet sind, ein Aufnahmeraum für wenigstens einen Wärmeübertrager, wenigstens ein Aufnahmeraum für einen Luftfilter, ein Wärmeübertrager, der in dem Aufnahmeraum angeordnet ist, zwei Radiallüfter, welche jeweils in einem Aufnahmeraum innerhalb des Gehäuses aufgenommen ist und dazu eingerichtet sind, die Frischluft und Abluft im Gegenstrom durch den Wärmeübertrager zu leiten, und ein Kondensatablauf vorgesehen, wobei das Gehäuse zwei seine Einbauhöhe definierende Wandungsflächen aufweist, welche im Wesentlichen parallel zueinander verlaufen, wobei eine der Wandungsflächen eine einem Wandbereich zugewandte Montageseite definiert, und wobei auf der gegenüberliegenden Wandungsfläche Öffnungen für mehrere, insbesondere für sämtliche, der in den Aufnahmeräumen am Gehäuse aufgenommen und aus dem Gehäuse entnehmbaren und/oder einsetzbaren Komponenten ausgebildet sind.

Vorzugsweise weist das Lüftungsgerät wenigstens einen Luftfilter auf, der in dem Aufnahmeraum oder in einem der mehreren Aufnahmeräume angeordnet ist.

Mit dem Anordnen bzw. Vorsehen von Öffnungen auf einer Seite des Lüftungsgerätes sind innerhalb des Lüftungsgerätes angeordnete Geräte-Komponenten sehr einfach zugänglich sind. Insbesondere das Entnehmen, Reinigen und Wiedereinsetzen bzw. das Austauschen einer der Geräte-Komponenten ist damit deutlich vereinfacht. Eine Demontage des gesamten Lüftungsgerätes, um an eine der Komponenten zu gelangen, wird dadurch vermieden. Üblicherweise werden die Lüftungsgeräte bspw. unterhalb einer Raumdecke bzw. in der Zwischendecke eines Gebäudes montiert. Dabei ist eine Wandungsfläche des Gehäuses dem Wandbereich zugewandt, welche eine Montageseite definiert. Es wird vorzugsweise vorgeschlagen, sämtliche Öffnungen, über die jeweils zu wartende Geräte-Komponenten des Lüftungsgerätes in oder aus Aufnahmeräumen eingesetzt oder entnommen werden können, auf der gegenüberliegenden Wandungsfläche auszubilden. Bei einem unterhalb einer Decke eines Gebäudes montierten Lüftungsgerät ist die mit den Öffnungen ausgerüstete Wandungsfläche für die Komponenten die dem Raum zugewandte Unterseite des Lüftungsgerätes. Zu den zu wartenden und damit zu entnehmenden, zumindest zu reinigenden und wiedereinzusetzenden Geräte-Komponenten, zählen unter anderem der Wärmeübertrager, der wenigstens eine Luftfilter und zumindest die zwei Radiallüfter des Lüftungsgerätes. Vorliegend können selbstverständlich auch weitere Geräte-Komponente, wie beispielsweise eine optional einsetzbare Zusatz-Heizeinrichtung über eine bevorzugte Öffnung an der unteren Wandungsfläche des Gehäuses aus dem Lüftungsgerät entnommen oder in das Lüftungsgerät eingesetzt werden.

Gemäß einer bevorzugten Weiterbildung des Lüftungsgerätes weisen die Komponenten eine im Wesentlichen senkrecht zu der Wandungsfläche aus den oder in die jeweiligen Aufnahmeräume im Gehäuse ausgerichtete Einsetz- und/oder Entnahmerichtung auf. Sämtliche Geräte-Komponenten, vorzugsweise der Wärmeübertrager, der oder die Luftfilter und die Ventilatoren, welche bevorzugt als Radiallüfter ausgebildet sind, werden somit senkrecht zur Wandungsfläche des Gehäuses aus dem Lüftungsgerät entnommen oder in das Lüftungsgerät eingesetzt, was den Vorgang des Entnehmens oder Einsetzens erheblich erleichtert.

Bevorzugt sind die Öffnungen zu den Aufnahmeräumen der Komponenten mittels flächenartiger Abdeckelemente verschlossen, wobei die Abdeckelemente vorzugsweise in einer gemeinsamen Ebene mit den die Abdeckelemente umgebenden Flächenbereichen der Wandungsfläche angeordnet sind. Die Abdeckelemente verschließen die Öffnungen bevorzugt fluiddicht, wodurch die Dichtheit des Lüftungsgerätes nach außen und zwischen den Strömungskanälen im Inneren bewirkt ist. Bevorzugt sind die Abdeckelemente auf einer Ebene mit den übrigen Bereichen der Wandungsfläche angeordnet, wodurch das Lüftungsgerät eine bevorzugt glatte Oberfläche an der Unterseite aufweist, an der das Anhaften von Schmutz verringert ist.

Eine bevorzugte Weiterbildung sieht vor, dass wenigsten eine der aus dem Gehäuse entnehmbare Geräte-Komponenten auf einer in Richtung des jeweiligen Aufnahmeraumes weisenden Innenseite eines eine Öffnung verschließenden Abdeckelementes angeordnet ist. Die Geräte-Komponente ist vorzugsweise an der Innenseite des Abdeckelementes befestigt, sodass bereits mit Öffnen und Abnehmen des Abdeckelementes am Lüftungsgerät, die damit gekoppelte Komponente aus dem Lüftungsgerät entnommen und auch mit dem Abdeckelement zusammen wieder in das Lüftungsgerät eingesetzt werden kann. Vorliegend soll unter dem Begriff "sämtliche Komponenten" all die Geräte-Komponenten verstanden werden, die im Laufe der Lebensdauer des Lüftungsgerätes einen Defekt aufweisen können und/oder in regelmäßigen Zeitabständen zu warten sind.

In einer weiteren Ausführungsform sind auf der die Öffnungen aufweisenden Wandungsfläche des Gehäuses und/oder den die Öffnungen verschließenden Abdeckelementen Prägungen vorgesehen, welche vorzugsweise dazu eingerichtet sind, die in den jeweiligen Aufnahmeraum einzusetzende Komponente zu definieren und/oder die Strömungsrichtung der durch die Komponente strömenden Frischluft oder Abluft anzugeben. Dadurch ist eine mit der Wartung oder der Reparatur betraute Person sofort in der Lage eine entsprechend auszutauschende oder zu wartende Geräte-Komponente zu lokalisieren und zu identifizieren. Ferner ist durch das Angeben der Strömungsrichtung gewährleistet, dass die gereinigte oder eine etwaige Ersatzkomponente in der korrekten Ausrichtung in den jeweiligen Aufnahmeraum am Lüftungsgerät eingesetzt wird. Etwaige Fehlfunktionen des Lüftungsgerätes werden dadurch im Vorfeld bevorzugt gering gehalten bzw. vermieden. Insbesondere ist die Wandungsfläche des Gehäuses und/oder der Abdeckelemente aus einem Kunststoffmaterial ausgebildet, in dem die Prägungen einfach eingebracht werden können. Unter einer Prägung ist vorliegend eine Kennzeichnung in Form eines Symboles zu verstehen, das auf der Wandungsfläche Vertiefungen und Erhöhungen hat, welche in einer bevorzugten Ausführungsform ertastbar sind.

Vorzugsweise weisen der Aufnahmeraum und die aus und in den Aufnahmeraum entnehmbaren und einsetzbaren Komponenten, bezogen auf ihre Querschnitte quer zur vorgesehenen Einsetzrichtung jeweils aufeinander abgestimmte freie innere und äußere Querschnitte auf, wobei der äußere Querschnitt einer jeweiligen Komponente formschlüssig mit einem freien inneren Querschnitt eines jeweiligen Aufnahmeraumes korrespondiert. Die Aufnahmeräume innerhalb des Gehäuses sind somit bevorzugt an die äußere Form bzw. den äußeren Querschnitt der jeweiligen Geräte-Komponente angepasst. Ein fehlerhaftes Einsetzen einer Komponente in einem dafür nicht vorgesehenen Aufnahmeraum ist dadurch vermieden. In einer bevorzugten Ausführungsform sind die Abmessungen der Komponenten und der Aufnahmeräume insofern aufeinander abgestimmt, dass ein geringes Spiel oder die Komponente geringfügig mit der Wandung des Aufnahmeraumes in Kontakt gelangt. Dadurch wird zum Entnehmen und Einsetzen eine verringerte Kraft benötigt, um die jeweilige Komponente aus dem Lüftungsgerät zu entfernen oder in das Lüftungsgerät einzusetzen.

In einer bevorzugten Ausgestaltung weist wenigstens eine der in die Aufnahmeräume einzusetzende Komponente und/oder ein die Öffnung des Aufnahmeraumes verschließendes Abdeckelement eine asymmetrische Form für eine Vorzugsausrichtung der Komponente in dem Aufnahmeraum oder des Abdeckelementes in der Öffnung auf. Mit der asymmetrischen äußeren Formgebung ist erreicht, dass eine Komponente oder ein Abdeckelement nur in einer bestimmten Ausrichtung in dem Aufnahmeraum oder in den Öffnungsausschnitt an der Wandungsfläche eingesetzt werden kann. Damit ist das Risiko einer Fehlmontage durch eine die Wartung oder eine Reparatur durchführende Person weiter minimiert. Bevorzugt ist vorgesehen, dass der Öffnungsausschnitt für ein Abdeckelement größer ist als der durch das Abdeckelement abzudeckende freie Querschnitt des dahinterliegenden Aufnahmeraums für eine jeweilige Geräte-Komponente.

In einer bevorzugten Weiterbildung des Lüftungsgerätes ist vorgesehen, dass die in den Aufnahmeraum einsetzbare Komponente und/oder das die Öffnung des Aufnahmeraumes verschließende Abdeckelement eine Handhabe zum Greifen der Komponente oder des Abdeckelementes aufweisen, wobei die Handhabe wenigstens ein in die Oberfläche des Abdeckelementes eingelassene Griffmulde aufweist. Mit der an der Geräte-Komponente oder dem Abdeckelement angeordneten Handhabe ist das kontrollierte Entnehmen und/oder Einsetzen der Komponente bzw. des Abdeckelementes vom oder am Gehäuse verbessert, was den Wartungsvorgang an einem solch bevorzugten Lüftungsgerät weiter vereinfacht. Bevorzugt ist die Handhabe an einem Abdeckelement eine in dessen Oberfläche eingelassene Griffmulde. Über die äußere Wandungsfläche an der Unterseite des Gehäuses vorstehende Bauteile sind somit nicht vorhanden. In einer bevorzugten Ausführungsform sind zur Ausbildung einer Griffmulde an einem Abdeckelement zumindest jeweils zwei im Abstand zueinander angeordnete Vertiefungen in der Wandungsfläche vorgesehen. Solche Vertiefungen können einfach mit den Fingern einer Hand gegriffen werden.

Vorzugsweise sind die in den Aufnahmeraum einsetzbare Komponente und/oder das die Öffnung des Aufnahmeraumes verschließende Abdeckelement über Befestigungsmittel mit dem Gehäuse gesichert, wobei die Befestigungsmittel vorzugsweise als Schnellverschlüsse ausgebildet sind. Über die Befestigungsmittel ist eine sichere Arretierung der Komponenten und/oder Abdeckelemente am Gehäuse des bevorzugten Lüftungsgerätes erreicht. Die Komponenten werden bevorzugt fest innerhalb eines jeweiligen im Gerätegehäuse ausgebildeten Strömungskanals für die Frischluft oder für die Abluft angeordnet. In einer Ausführung sind auch die die Öffnungen verschließenden Abdeckelemente über entsprechende Befestigungsmittel am Gehäuse gesichert. Bevorzugt stehen die Abdeckelemente mittels der Befestigungsmittel jeweils in abdichtender Anlage mit den jeweils zusammenwirkenden Flächenbereichen des Gehäuses. Gemäß einer möglichen Ausführungsform sind die Befestigungsmittel für die Geräte-Komponenten und/oder Abdeckelemente als Schnellverschlüsse ausgebildet. Mittels Schnellverschlüssen ist das Entkoppeln einer jeweiligen Komponente oder Abdeckelementes vom Gerätegehäuse und ein erneutes Befestigen der Komponente oder Abdeckelementes am Gehäuse vereinfacht.

Gemäß einer bevorzugten Weiterbildung sind Bereiche und/oder Abschnitte eines die Frischluft oder Abluft im Gehäuse führenden Strömungskanals durch die EPS-Schalen ausgebildet. Vorzugsweise sind die EPS-Schalen miteinander verbunden, insbesondere stoffschlüssig miteinander verbunden. Die Strömungskanäle zum Führen der Abluft und der Frischluft werden bevorzugt aus zwei vorfertigbaren Kunststoffteilen gebildet, welche durch einfaches Aufeinandersetzen zusammengefügt und unter Verwendung eines geeigneten Haftvermittlers abdichtend miteinander verbunden werden. In den vorgefertigten Schalenkörper sind die entsprechenden Ausnehmungen für die auszubildenden Aufnahmeräume für die Geräte-Komponenten ausgespart. Ferner sind durch das stoffschlüssige Verbinden der beiden Schalenkörper die Abluftströmung und die Frischluftströmung fluidtechnisch voneinander getrennt. Vorzugsweise sind die als EPS-Schalen ausgebildeten Schalenkörper in einer Ebene parallel zwischen den die Wandungsflächen ausbildenden Außenseiten des Gehäuses getrennt. Jeder Schalenkörper weist somit im Wesentlichen die umfänglichen Außenabmessungen des Gerätegehäuses auf.

Ferner ist gemäß einer Ausführungsform vorgesehen, dass die als Radiallüfter ausgebildeten Ventilatoren in Strömungsrichtung der Frischluft und/oder Abluft jeweils hinter dem Wärmeübertrager angeordnet und dazu eingerichtet sind, Frischluft und/oder Abluft durch die Strömungskanäle des Lüftungsgerätes zu saugen. Die Radiallüfter sind somit bevorzugt in Strömungsrichtung von Frischluft und Abluft in einem jeweiligen Strömungskanal dem Wärmeübertrager nachgeschaltet. Mögliche Druckverluste werden somit auf ein Minimum reduziert. Der mittels des Radiallüfters erzeugte Druckunterschied zwischen seinem Einlass und seinen Auslass kann dadurch optimal und effizient für das Hindurchleiten von z.B. der Frischluft in das an das Lüftungsgerät angeschlossene Lüftungssystem genutzt werden.

Vorzugsweise kann ein Verfahren zum Warten eines Lüftungsgerätes vorgesehen sein, wobei wenigstens eine bevorzugt mehrere Komponenten über eine Öffnung an einer Wandungsfläche des Gehäuses aus einem oder in einem jeweils zugeordneten Aufnahmeraum im Gehäuse entnommen und/oder eingesetzt werden, vorzugsweise im Wesentlichen senkrecht zu der Wandungsfläche. Bevorzugt können zu wartende oder Instand zusetzende Geräte-Komponenten des Lüftungsgerätes aus dem Lüftungsgerät entnommen und/oder darin wieder eingesetzt werden, während das Lüftungsgerät in seiner Einbaulage bevorzugt unterhalb einer Raumdecke eines Gebäudes verbleibt. Ein ggf. aufwendiges Demontieren des Lüftungsgerätes um eine Wartung oder einen Austausch einer am oder im Lüftungsgerät angeordneten Geräte-Komponente vornehmen zu müssen, kann dadurch unterbleiben.

Die zum Lüftungsgerät beschriebenen, bevorzugten Ausführungsformen bzw. Weiterbildungen sind zugleich auch bevorzugte Ausführungsformen des bevorzugten Verfahrens zum Warten eines Lüftungsgerätes.

Die Verkeileinheit eines Lüftungsgeräts zum Verkeilen eines Wärmeübertragers in einem Lüftungsgerät umfasst erfindungsgemäß
- einen Keilabschnitt, der dazu eingerichtet ist, den Wärmeübertrager mit dem Lüftungsgerät derart zu verkeilen, dass der Wärmeübertrager durch die Verkeilung in einer Betriebsposition gehalten wird,
   und
- einen Griffabschnitt, welcher sich von dem oberen Ende des Keilabschnittes erstreckt, um die Verkeileinheit aus der Verkeilung zu lösen,
wobei der Keilabschnitt wenigstens zwei Paare gegenüberliegender Seiten aufweist,
- ein erstes Paar gegenüberliegender Seiten
   und
- ein zweites Paar gegenüberliegender Seiten, das sich zu dem unteren Ende der Verkeileinheit verjüngt,

Die Erfindung betrifft demnach den Gedanken, dass der Austausch des Wärmeübertragers in bereits bekannten Lüftungsgeräten verhältnismäßig schwierig ist und dies die Gefahr einer Beschädigung des Wärmeübertragers, insbesondere der Dichtungen, beim Austausch erhöht. Ein problemloser Austausch des Wärmeübertragers ist insbesondere deswegen schwierig, weil der Wärmeübertrager in den für den Wärmeübertrager vorgesehenen Aufnahmeraum möglichst genau passen muss. Die genaue Passform des Wärmeübertragers ermöglicht so, die erforderliche Dichtigkeit des Lüftungsgeräts sicherzustellen.

Gemäß der Erfindung weist der Keilabschnitt wenigstens zwei Paare gegenüberliegender Seiten auf, wobei
- ein erstes Paar gegenüberliegender Seiten bevorzugt ein Dichtungsmaterial aufweist
   und
- ein zweites Paar gegenüberliegender Seiten sich zu dem unteren Ende der Verkeileinheit verjüngt.

Die vorliegende Erfindung löst die oben genannte Aufgabe durch ein Lüftungsgerät mit Verkeileinheit zum Verkeilen eines Wärmeübertragers in dem Lüftungsgerät, welche auf einfache und elegante Art mittels eines Griffabschnittes entfernt werden kann, sodass sich der in dem Lüftungsgerät befindliche Wärmeübertrager in einer Entnahmeposition befindet. In der Entnahmeposition kann der Wärmeübertrager problemlos nach einem Öffnen des Gehäuses des Lüftungsgeräts (beispielsweise EPS-Schale) entnommen werden. Anschließend kann ein neuer bzw. gewarteter Wärmeübertrager in den entsprechenden Aufnahmeraum installiert werden. Die Installation erfolgt dabei so, dass der neue bzw. gewartete Wärmeübertrager nach dessen Einfügen in den dafür vorgesehenen Aufnahmeraum mit der Verkeileinheit so verkeilt wird, dass der eingefügte Wärmeübertrager sich in einer Betriebsposition befindet.

Vorteilhaft weist das erste Paar gegenüberliegender Seiten der Verkeileinheit ein Dichtungsmaterial auf. Das Dichtungsmaterial stellt dabei sicher, dass es keinen Abstand zwischen der Verkeileinheit und dem auf der einen Seite anliegenden Lüftungsgerät bzw. dem auf der anderen Seite anliegenden Wärmeübertrager gibt, sodass weder ein Stofftransport von dem Frischluftstrom zum Abluftstrom, noch vom Abluftstrom zum Frischluftstrom ermöglicht wird.

Ein weiterer Vorteil der Verkeileinheit ist, dass ein zweites Paar gegenüberliegender Seiten sich zum unteren Ende der Verkeileinheit verjüngt, wodurch das Einsetzen und das Herausnehmen vereinfacht ist, sodass eine Gefahr der Beschädigung des Wärmeübertragers bei dessen Austausch oder einem anderen Bestandteil beträchtlich verringert wird.

Der Ausdruck "verjüngen" heißt im Rahmen der vorliegenden Erfindung, dass die Breite der Seiten des zweiten Paares gegenüberliegender Seiten am unteren Ende kleiner ist als am oberen Ende. Die Breite der Seiten ist dabei zu unterscheiden von deren Dicke (entspricht der Wandstärke) und deren Höhe, welche senkrecht zur Breite der Seiten verläuft.

Das untere Ende der Seiten des zweiten Paares gegenüberliegender Seiten ist im Rahmen der vorliegenden Erfindung das Ende des Keilabschnittes der Verkeileinheit, welches am weitesten von dem Griffabschnitt der Verkeileinheit entfernt ist.

Das obere Ende der Seiten des zweiten Paares gegenüberliegender Seiten ist im Rahmen der vorliegenden Erfindung das dem unteren Ende gegenüberliegende Ende der Seiten des zweiten Paares gegenüberliegender Seiten.

Vorzugsweise geht eine Seite des zweiten Paares gegenüberliegender Seiten in den Griffabschnitt über.

Vorzugsweise weist der Keilabschnitt eine oder mehrere Verstärkungsstützen auf, welche von einer Seite des zweiten Paares gegenüberliegender Seiten zu der anderen Seite des zweiten Paares gegenüberliegender Seiten verlaufen, so dass sie das zweite Paar gegenüberliegender Seiten stützen. Die Verkeileinheit bekommt so insgesamt eine höhere mechanische Stabilität und ist somit weniger anfällig für Schäden und gleichzeitig stärker belastbar, ohne massiv ausgebildet zu sein. Die Verkeileinheit ist dadurch auch per Spritzguss herstellbar.

Vorzugsweise erstreckt sich eine Längsachse des Griffabschnittes in eine andere Richtung als eine Längsachse des Keilabschnittes, wobei die Längsachse des Griffabschnittes vorzugsweise senkrecht auf der Längsachse des Keilabschnittes steht.

Im Rahmen der vorliegenden Erfindung ist die Längsachse des Keilabschnittes die Achse des Keilabschnittes, welche entlang der Höhe des Keilabschnittes verläuft. Die Höhe des Keilabschnittes ist dabei senkrecht zur Breite und Dicke des Keilabschnittes und sowohl größer als die Breite als auch größer als die Dicke des Keilabschnittes. Dicke und Breite des Keilabschnittes stehen vorzugsweise senkrecht zueinander.

Die Längsachse des Griffabschnittes ist im Rahmen der vorliegenden Erfindung die Achse, welche sich vom Punkt, an dem der Griffabschnitt am Keilabschnitt befestigt ist, zur gegenüberliegenden Seite des Griffabschnittes erstreckt.

Es ist vorteilhaft, dass sich die Längsachse des Griffabschnittes in eine andere Richtung erstreckt als die Längsachse des Keilabschnittes, da so ein besserer Hebel beim Herausnehmen der Verkeileinheit erreicht werden kann, welche somit schneller und müheloser aus einem Lüftungsgerät entfernt werden kann.

Vorzugsweise bildet jede Seite des ersten Paares gegenüberliegender Seiten jeweils einen Winkel von etwa 90° sowohl mit der einen als auch mit der anderen Seite des zweiten Paares gegenüberliegender Seiten. Im Rahmen der vorliegenden Erfindung bedeutet der Ausdruck "einen Winkel von etwa 90°" vorzugsweise, dass der Winkel zwischen 80 und 100°, insbesondere zwischen 85° und 95°, beträgt.

Dadurch, dass die Seiten des ersten Paares gegenüberliegender Seiten und die des zweiten Paares gegenüberliegender Seiten etwa 90° betragen, erhält die resultierende Verkeileinheit einen höheren Grad an Symmetrie. Durch diese symmetrische Anordnung ist es für den Bediener einfacher, eine Verkeileinheit wie vorstehend als bevorzugt beschrieben in einem Lüftungsgerät erfindungsgemäß zu verwenden, da beim Einsetzen oder Entnehmen der Verkeileinheit beispielsweise nicht darauf geachtet werden muss, in welche Richtung der Griffabschnitt zeigt.

Vorzugsweise beträgt der Verjüngungswinkel der einen Seite und der anderen Seite des zweiten Paares gegenüberliegender Seiten zwischen 0,5° und 10°, bevorzugt zwischen 1° und 5° und besonders bevorzugt zwischen 2° und 4°. Eine derartige Verkeileinheit lässt sich besonders mühelos in das Lüftungsgerät einfügen, ohne die Dichtung zu gefährden.

Der Verjüngungswinkel der einen Seite bzw. der anderen Seite des zweiten Paares gegenüberliegender Seiten ist im Rahmen der vorliegenden Erfindung der Winkel, welcher zwischen den beiden Verjüngungskanten der jeweiligen Seite des zweiten Paares gegenüberliegender Seiten aufgespannt wird, wobei die beiden Verjüngungskanten die Kanten sind, welche zwischen der jeweiligen Seite des zweiten Paares gegenüberliegender Seiten mit den Seiten des ersten Paares gegenüberliegender Seiten gebildet werden.

Vorzugsweise ist ein Querschnitt des Griffabschnittes in jeder Richtung kleiner als eine Breite des zweiten Paares gegenüberliegender Seiten an dem oberen Ende des Keilabschnittes. Die Breite des ersten Paares gegenüberliegender Seiten am oberen Ende des Keilabschnittes ist im Rahmen der vorliegenden Erfindung die Kantenlänge der Kante, welche senkrecht zur Längsachse des Keilabschnittes steht und dem Griffabschnitt am nächsten ist. Der Griffabschnitt ist somit im Vergleich zum Keilabschnitt eher klein und nimmt nicht unnötig viel Platz im Lüftungsgerät ein, jedoch gleichzeitig wird immer noch ein müheloses Einsetzen und Entnehmen der Verkeileinheit ermöglicht.

Vorzugsweise ist das Dichtungsmaterial in Form von Streifen aufgetragen, insbesondere aufgeklebt. Das Aufbringen des Dichtungsmaterials in Form von Streifen ist vorteilhaft, da diese Art des Aufbringens prozesstechnisch üblicherweise auf sehr elegante und problemlose Art bewerkstelligt werden kann.

Vorzugsweise weisen die Wände, welche Seiten des Keilabschnittes bilden, eine gleichmäßige Wandstärke im Bereich von 0,1 mm bis 10 mm auf, bevorzugt im Bereich von 0,5 mm bis 5 mm, besonders bevorzugt im Bereich von 1 mm bis 3 mm.

Diese Wandstärken bewirken einerseits eine ausreichend hohe mechanische Stabilität der Verkeileinheit, welche somit weniger schadensanfällig und daher auch länger einsetzbar ist. Andererseits sollte die Wandstärke nicht zu groß sein, um gleichzeitig einem unnötig hohen Materialverbrauch entgegenzuwirken.

In einer weiteren Ausführung betrifft die Erfindung auch ein Lüftungsgerät mit einem Gehäuse, das zwei EPS-Schalen aufweist, einem Innenraum-Frischluftanschluss und einem Innenraum-Abluftanschluss, welche beide auf einer Seite in Längsrichtung des Lüftungsgeräts angeordnet sind sowie einem Außenraum-Frischluftanschluss und einem Außenraum-Abluftanschluss, welche beide auf einer in Längsrichtung des Lüftungsgeräts gegenüberliegenden Seite angeordnet sind, zwei Radiallüftern, welche so eingerichtet sind, dass die Frischluft und Abluft im Gegenstrom operieren, einem Kondensatablauf, einem Aufnahmeraum für einen Wärmeübertrager, wenigstens einem Aufnahmeraum für einen Luftfilter, einem Wärmeübertrager, der in dem Aufnahmeraum angeordnet ist und einer Verkeileinheit, wobei der Wärmeübertrager sich in einer Entnahmeposition befindet, wenn die Verkeileinheit zumindest teilweise entfernt ist, wobei der Wärmeübertrager sich in einer Betriebsposition befindet, wenn die Verkeileinheit eingefügt ist und den Wärmeübertrager in dem Aufnahmeraum verkeilt, wobei der Innenraum-Frischluftanschluss, der Innenraum-Abluftanschluss, der Außenraum-Frischluftanschluss, der Außenraum-Abluftanschluss, die zwei Radiallüfter, der Aufnahmeraum, der Wärmeübertrager und die Verkeileinheit im Wesentlichen in einer Ebene angeordnet sind, wobei ein Zugriff zur Wartung, insbesondere zur Entnahme, wenigstens auf beide Radiallüfter, auf mindestens einen der Aufnahmeräume, auf einen oder mindestens einen der Luftfilter, auf den Wärmeübertrager und auf die Verkeileinheit über die gleiche Seite des Gehäuses ermöglicht ist.

Vorzugsweise weist das Lüftungsgerät ferner wenigstens einen Luftfilter auf, der in dem einen Aufnahmeraum oder in einem der mehreren Aufnahmeräume angeordnet ist.

Bevorzugt ist ein Lüftungsgerät wie vorstehend beschrieben, wobei die zwei EPS-Schalen miteinander verklebt sind. Es ist vorteilhaft, die beiden EPS-Schalen miteinander zu verkleben, da ein erfindungsgemäßes Lüftungsgerät so besonders schnell, ohne besondere technische Anforderungen und sehr materialsparend hergestellt werden kann, wobei die Dichtheit durch das Verkleben gewährleistet ist. Weiterhin ist es vorteilhaft, dass das erfindungsgemäße Lüftungsgerät aufgrund des EPS-Materials ein geringes Gewicht aufweist und sich daher besonders für eine Deckeninstallation eignet. Vorteilhaft ist auch, dass bei einem erfindungsgemäßen Lüftungsgerät die Luftführung und die Wärmeisolation in einem Material integriert sind.

Die Erfindung betrifft auch ein Montageverfahren zum Montieren einer Verkeileinheit in einem Lüftungsgerät und/oder eines Wärmeübertragers in einem Lüftungsgerät umfassend die folgenden Schritte: Einfügen eines Wärmeübertragers in einen Aufnahmeraum des Lüftungsgeräts und Verkeilen des Wärmeübertragers mit der Verkeileinheit in dem Aufnahmeraum des Lüftungsgeräts, sodass sich der Wärmeübertrager in einer Betriebsposition befindet und vorzugsweise ein Lüftungsgerät wie vorstehend beschrieben resultiert.

Die Erfindung betrifft auch ein Demontageverfahren zum Entfernen einer Verkeileinheit aus einem Lüftungsgerät, und/oder eines Wärmeübertragers aus einem Lüftungsgerät, umfassend die folgenden Schritte: Bereitstellen eines Lüftungsgerätes, wobei sich ein WärmeÜbertrager in einer Betriebsposition befindet, zumindest teilweises Entfernen der Verkeileinheit aus dem Lüftungsgerät, sodass sich der Wärmeübertrager in einer Entnahmeposition befindet, und optional Entnehmen des Wärmeübertragers aus dem Lüftungsgerät.

Nachfolgend wird die Erfindung anhand eines möglichen Ausführungsbeispiels unter Bezugnahme auf die beigefügten Figuren näher beschrieben. Hierbei zeigen:
- Fig. 1:: schematisch und exemplarisch eine perspektivische Ansicht eines Lüf-tungsgerätes im Schnitt;
- Fig. 2:: schematisch und exemplarisch eine Ansicht des in Fig. 1 gezeigten Lüf-tungsgerätes;
- Fig. 3-5:: perspektivische Ansichten des Lüftungsgerätes aus Fig.1 und 2 von sei-ner Unterseite;
- Fig. 6:: eine perspektivische Ansicht der zur Ausbildung des Gehäuses verwen-deten EPS-Schalen;
- Fig. 7: schematisch und exemplarisch eine weitere perspektivische Ansicht ei-nes Lüftungsgeräts;
- Fig. 8: schematisch und exemplarisch eine Draufsicht auf das in Fig. 7 gezeigte Lüftungsgerät und
- Fig. 9: schematisch und exemplarisch verschiedene Ansichten einer Verkeilein-heit.

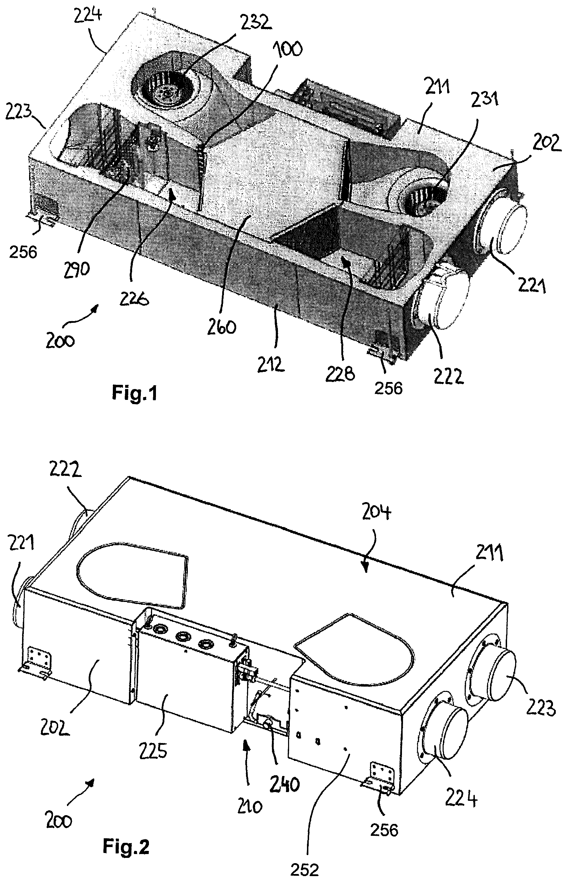

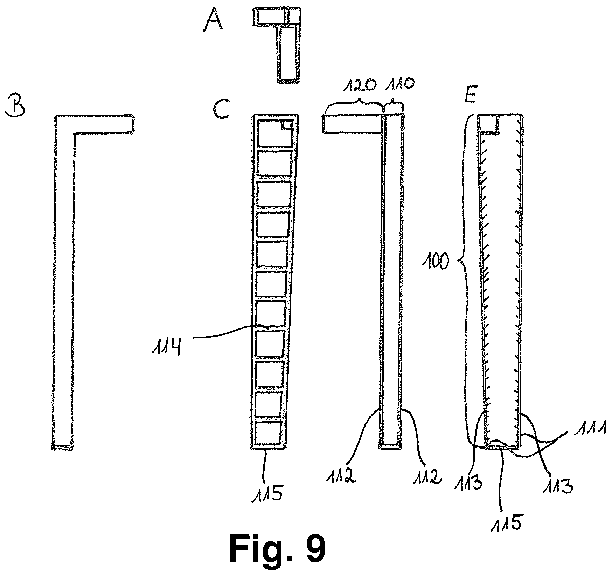

Fig. 1 zeigt eine schematische Darstellung eines Lüftungsgeräts 200 im Schnitt. Das Lüftungsgerät 200 ist beispielsweise zum Einbau in einem eingeschränkten Raum unterhalb einer Raumdecke eines Gebäudes konzipiert. Das Lüfungsgerät 200 weist ein Gehäuse 202 mit mehreren Anschlüssen 221 bis 224, zum Beispiel jeweils einen Auslass und Einlass von Frischluft und Abluft, einen Wärmeübertrager 260, zwei EPS-Schalen 211, 212, zwei Radiallüfter 231, 232 sowie einen Aufnahmeraum 270 mit einem Luftfilter 280 sowie eine Verkeileinheit 100 auf. Der Wärmeübertrager 260 wird mittels einer Verkeileinheit 100 in der Montageposition gehalten und luftdicht montiert, so dass kein Fluidübertrag zwischen Zuluft und Abluft möglich ist. Die Verkeileinheit 100 ermöglicht eine einfache Wartung und Montage des Wärmeübertragers 260, auch in einer Einbausituation unter der Decke, bei der ein Zugriff auf die Komponenten über Kopf erfolgen muss. Die Verkeileinheit 100 wird mit Verweis auf Fig. 9 genauer beschrieben werden.

Fig. 1 zeigt die in der Einbausituation von der Decke nach unten zeigende Montageseite 204 (vgl. Fig. 2) des Lüftungsgeräts 200. Es ist gut erkennbar, dass die vorstehend genannten Geräte-Komponenten 231, 232, 260, 280, 290 des Lüftungsgeräts 200 im Wesentlichen in einer Ebene angeordnet sind. Die Radiallüfter 231, 232 sind dabei so angeordnet, dass sie den Frischluft- bzw. Abluftstrom durch den Wärmeübertrager 260 ziehen. Frischluft und Abluft operieren dabei im Gegenstrom. Die spezifische Anordnung erfüllt besonders geschickt die Anforderungen für einen räumlich begrenzten Raum und ermöglicht durch die Verwendung von Radiallüftern dennoch das Fördern eines großen Volumenstroms durch das Lüftungsgerät 200.

Der Wärmeübertrager 260 ist in diesem Beispiel hexagonal, was den Raum vorteilhaft ausnutzt, aber auch andere Formen von Wärmeübertragern sind in anderen Ausführungen denkbar. In diesem Beispiel ist ferner ein Luftfilter 280 in einem Aufnahmeraum 270 gezeigt. In anderen Beispielen können auch andere Luftfilter und/oder andere Elemente, wie beispielsweise Zusatz-Heizeinrichtung 290, in einem Aufnahmeraum 285 angeordnet sein. Ferner können weitere Aufnahmeräume auch an anderen Positionen im Strömungspfad angeordnet sein. Vorzugsweise wird die Außenluft vor Durchströmen des Wärmeübertragers 260 gefiltert, um eine Verschmutzung des Wärmeübertragers 260 zu verringern und die Wartungsintervalle zu verlängern.

Fig. 2 zeigt das Lüftungsgerät 200 aus Fig. 1 bei geschlossenem Gehäuse 202 mit Blick auf eine Montageseite 204. In Fig. 2 ist ein Kondensatablauf 240 und eine Steuer- und Versorgungseinheit 225 zu sehen, welche in einer Aussparung 210 an einer der Längsseiten des Gehäuses 202 angeordnet sind.

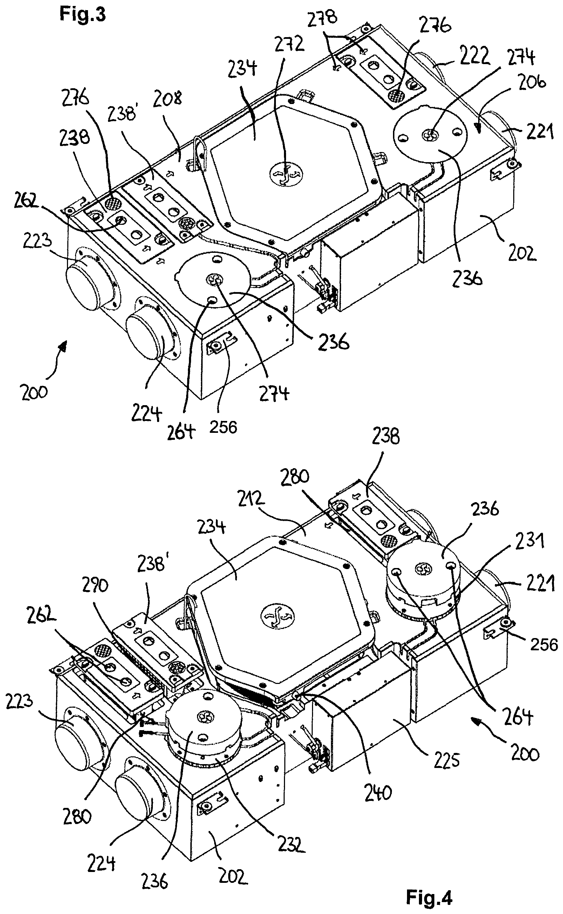

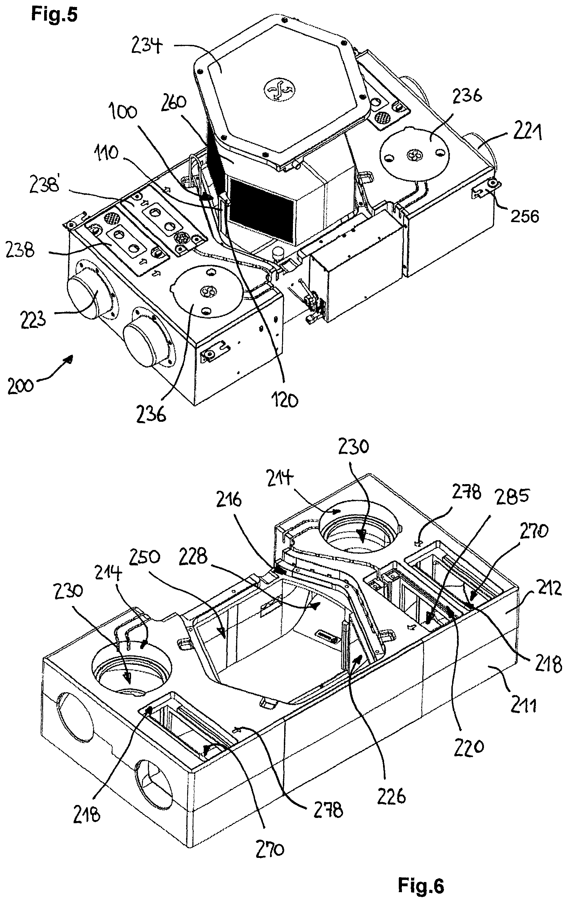

Fig. 3 zeigt eine perspektivische Ansicht des Lüftungsgerätes 200 mit seinem Gehäuse 202 von unten und somit von der dem Raum zugewandten Unterseite 206, beispielsweise im Fall einer Einbausituation unterhalb der Raumdecke. Die zugängliche Unterseite 206 ist der Montageseite 204 gegenüberliegend angeordnet. In der die Unterseite 206 ausbildenden Wandungsfläche 208 sind jeweils Öffnungen 214, 216, 218 und 220 (Fig. 6) vorgesehen, über die die Geräte-Komponenten 231, 232, 260, 280, 290 in die oder aus den Aufnahmeräumen 230, 250, 270, 285 am Gehäuse 202 entnommen und/oder darin eingesetzt werden können.

In einer bevorzugten Ausführungsform werden die Öffnungen 214 bis 220 mittels Abdeckelementen 234, 236, 238, 238' verschlossen, wobei die Abdeckelemente mit der Wandungsfläche 208 eine gemeinsame Ebene ausbilden. Das Ansteuern und die Energieversorgung der an oder innerhalb des Gehäuses angeordneten elektrischen Geräte-Komponente, wie der Radiallüfter 231, 232 und der Zusatz-Heizeinrichtung 290 erfolgt mittels der an der umfangsseitigen Außenfläche des Gehäuses 202 in der Aussparung 210 angeordneten Steuer- und Versorgungseinheit 225. Die Steuer- und Versorgungseinheit 225 ist dabei so in der Aussparung 210 eingesetzt, dass diese nicht über die äußeren Abmessungen des Gehäuses 202 vorsteht.

Wie ferner aus Fig. 3 und auch 4 ersichtlich, sind an den die Öffnungen aufweisenden Wandungsfläche 208 bzw. den die Öffnungen 214 bis 220 verschließenden Abdeckelementen 234 bis 238' jeweils Prägungen 272, 274, 276 vorgesehen, welche bspw. die Art der in einem jeweiligen Aufnahmeraum 230, 250, 270, 285 ausgebildeten Geräte-Komponente definiert und/oder die Strömungsrichtung der durch die Komponente strömenden Frischluft oder Abluft angeben.

Wie die Fig. 4 und 5 verdeutlichen, sind die Abdeckelemente 234 bis 238 und die Geräte-Komponenten 231, 232, 260, 280, 290 im Wesentlichen senkrecht zu der Wandungsfläche 208 aus dem oder in den jeweiligen zugeordneten Aufnahmeraum 230, 250, 270, 285 einsetzbar und/oder entnehmbar. Wie ferner aus Fig. 4 ersichtlich, weisen die Geräte-Komponenten 231, 232, 260, 280, 290 jeweils einen äußeren Querschnitt auf, der insbesondere abgestimmt ist auf den freien inneren Querschnitt des jeweils zugeordneten Aufnahmeraumes 230, 250, 270, 285. Fig. 4 zeigt ferner, dass der Wärmeübertrager im mittleren Bereich des Gehäuses 202 unterhalb des Abdeckelementes 236 aufgenommen ist. Die Radiallüfter 231, 232 sind in den im Gehäuse ausgebildeten Strömungskanälen in Strömungsrichtung hinter dem Wärmeübertrager 260 angeordnet, sodass die Radiallüfter die Abluft und die Frischluft jeweils durch das Lüftungsgerät saugen.

Der Wärmeübertrager 260 ist mittels einer in Fig. 5 gezeigten Verkeileinheit 100 innerhalb des Aufnahmeraumes 250 arretiert, die vor dem Entnehmen des Wärmeübertragers zu Lösen ist. Mittels der Verkeileinheit 100 erfolgt das Verklemmen des Wärmeübertragers 260 im Gehäuse 202 und die Abdichtung zwischen den voneinander zu trennenden Strömungskanälen und die Abluft. Die Verkeileinheit umfasst einen Klemmabschnitt 110 und einen Griffabschnitt 120. Vorzugsweise ist die Verkeileinheit 100 als Spritzgussteil ausgestaltet, wobei Verstrebungen eine Stabilität der Verkeileinheit 100 sichern, ohne dass die Verkeileinheit 100 als Massivbauteil auszugestalten ist.

Wie die Fig. 3 bis 5 auch zeigen, sind an den Abdeckelementen 234, 236 als Griffmulden ausgebildete Handhaben 262, 264 zum Greifen von zumindest den Abdeckelementen 236, 238 vorgesehen. Ferner sind an den seitlichen Umfangswandungen des Gehäuses 202 Montagehalterungen 256 für das unterhalb einer Raumdecke anzuordnende Lüftungsgerät 200 angeordnet. Über die Montagehalterungen 256 und mit den Montagehalterungen zusammenwirkende in einer Raumdecke zu befestigen Gewindestangen, wird das Lüftungsgerät 200 unterhalb der Raumdecke aufgehängt.

Fig. 6 zeigt die Ausgestaltung zumindest eines Teils des Gehäuses 202, das zwei EPS-Schalen 211, 212 aufweist, mit denen Bereiche und/oder Abschnitte der die Frischluft oder die Abluft im Gehäuse führenden Strömungskanäle 226, 228 (Fig.1) ausgebildet sind. Die EPS-Schalen sind etwa halbschalen-förmig ausgebildet und sind etwa auf der halben Höhe des mittels der EPS-Schalen 211, 212 ausgebildeten Gehäuses 202 voneinander getrennt. Die EPS-Schalen werden stoffschlüssig miteinander verbunden.

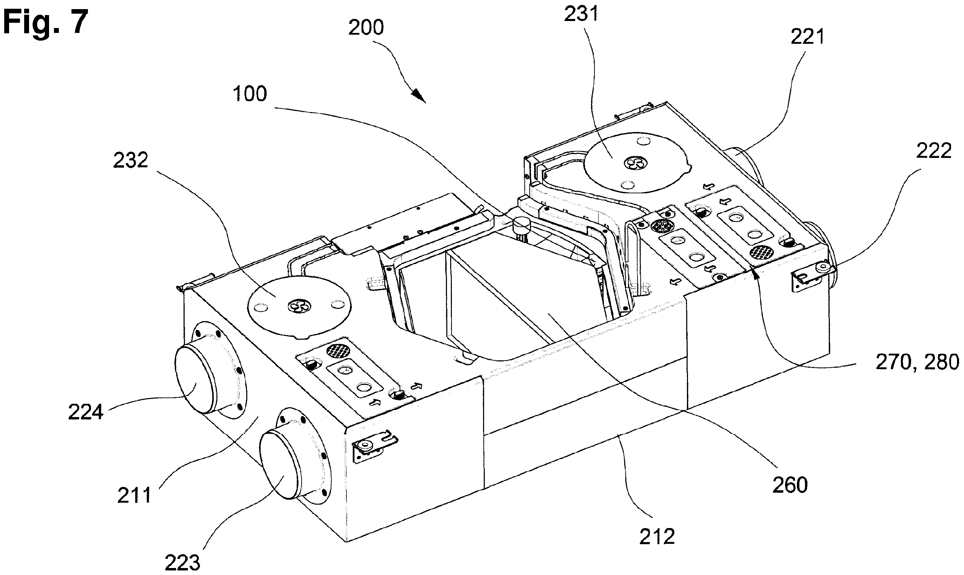

Fig. 7 zeigt eine weitere schematische Darstellung eines Lüftungsgeräts 200, wie es in Fig. 1 gezeigt ist.

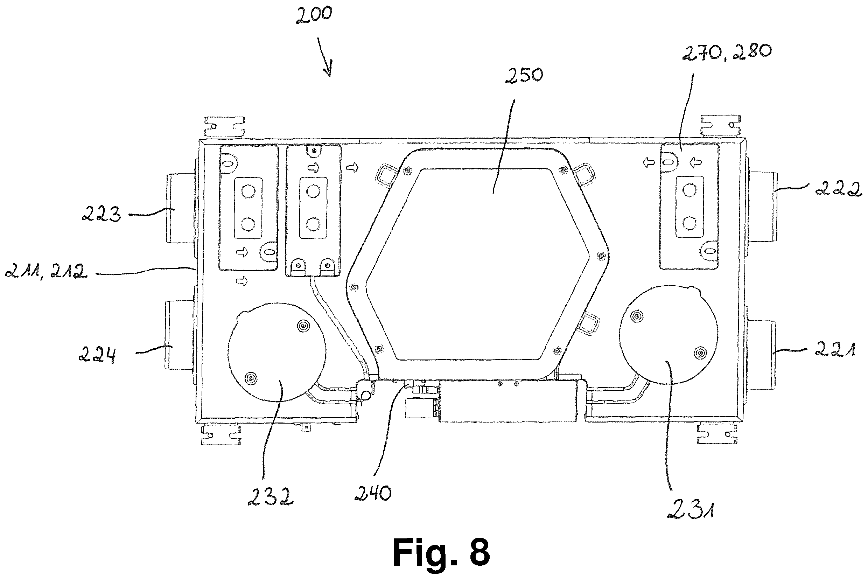

Fig. 8 zeigt wie Fig. 7 ein Lüftungsgerät 200, in dieser Ansicht von oben, das heißt in einer Draufsicht auf die dem Raum abgewandten Seite, beispielsweise im Fall einer Einbausituation unter der Decke. In Fig. 8 ist der Kondensatablauf 240 und eine Abdeckung über dem Aufnahmeraum 250 für den Wärmeübertrager 260 sichtbar. Auch zu sehen ist eine der zwei EPS-Schalen 211, 212 und die Abdeckungen der zwei Radiallüfter 231, 232. Auch auf den Aufnahmeraum 270, in dem sich beispielsweise der Luftfilter 280 angeordnet befindet, ist ein direkter und unkomplizierter Zugriff, beispielsweise zu Wartungszwecken, jederzeit möglich.

Fig. 9 zeigt eine Verkeileinheit 100 aus fünf verschiedenen Perspektiven in den Ansichten A bis E. In den Seitenansichten Ansichten B und D ist der Griffabschnitt 120 und der Keilabschnitt 110 zu sehen. Der Griffabschnitt 120 erstreckt sich senkrecht von dem Keilabschnitt 110 an einem oberen Ende davon. Die Breitenverteilung von Griffabschnitt 120 und Keilabschnitt 110 ist der Draufsicht in Ansicht A zu entnehmen, die geringere Breite des Keilabschnittes 110 ist auch in der Vorderansicht E zu erkennen. In Ansicht E ist das Dichtungsmaterial 111 gezeigt, das auf einem ersten Paar gegenüberliegender Seiten angeordnet sein kann. Das erste Paar gegenüberliegenderSeiten dichtet im Einbauzustand den Wärmeübertrager 260 gegen das Gehäuse ab.

Vorzugsweise ist die Verkeileinheit 100 als Spritzgussteil ausgestaltet, wobei Verstrebungen eine Stabilität der Verkeileinheit 100 sichern, ohne dass die Verkeileinheit 100 als Massivbauteil auszugestalten ist. Die Winkel und Längen in der Zeichnung können maßstabsgetreu bei tatsächlichen Verkeileinheiten 100 zum Einsatz kommen, sind aber natürlich nur als beispielhaft zu verstehen und auch andere Längen und Winkelverhältnisse können in anderen Ausführungsbeispielen verwendet werden.

### Bezugszeichenliste

- 100: Verkeileinheit
- 110: Keilabschnitt
- 111: Dichtungsmaterial
- 120: Griffabschnitt
- 200: Lüftungsgerät
- 202: Gehäuse
- 204: Montageseite
- 206: Unterseite
- 208: Wandungsfläche
- 210: Aussparung
- 211, 212: EPS-Schalen
- 214, 216, 218, 220: Öffnung
- 221: Innenraum-Frischluftanschluss
- 222: Innenraum-Abluftanschluss
- 223: Außenraum-Frischluftanschluss
- 224: Außenraum-Abluftanschluss
- 225: Steuer- und Versorgungseinheit
- 226, 228: Strömungskanal
- 230, 250, 270, 285: Aufnahmeraum
- 231, 232, 260, 280, 290: Geräte-Komponente
- 234, 236, 238, 238': Abdeckelemente
- 240: Kondensatablauf
- 252: Umfangswandungen
- 256: Montagehalterung
- 262,264: Handhabe
- 272,274,276,278: Prägung

## Patentansprüche

1. Lüftungsgerät (200) mit:
- einem Aufnahmeraum (250) für einen Wärmeübertrager (260),
- einem Wärmeübertrager (260), der in dem Aufnahmeraum (250) angeordnet ist, und
- einer Verkeileinheit (100),
wobei der Wärmeübertrager (260) sich in einer Entnahmeposition, in der der Wärmeübertrager (260) entnehmbar ist, befindet, wenn die Verkeileinheit (100) zumindest teilweise entfernt ist,
wobei der Wärmeübertrager (260) sich in einer Betriebsposition befindet, wenn die Verkeileinheit (100) eingefügt ist und den Wärmeübertrager (260) in dem Aufnahmeraum (250) verkeilt,
wobei die Verkeileinheit (100) umfasst:
- einen Keilabschnitt (110), der dazu eingerichtet ist, den Wärmeübertrager (260) mit dem Lüftungsgerät (200) derart zu verkeilen, dass der Wärmeübertrager (260) durch die Verkeilung in einer Betriebsposition gehalten wird,
und
- einen Griffabschnitt (120), welcher sich von dem oberen Ende des Keilabschnittes (110) erstreckt, um die Verkeileinheit (100) aus der Verkeilung zu lösen,
wobei der Keilabschnitt (110) wenigstens zwei Paare gegenüberliegender Seiten aufweist,
- ein erstes Paar gegenüberliegender Seiten (112)
und
- ein zweites Paar gegenüberliegender Seiten (113), das sich zu dem unteren Ende (115) der Verkeileinheit (100) verjüngt.

2. Lüftungsgerät (200) nach Anspruch 1,
wobei wenigstens eine Seite des zweiten Paares gegenüberliegender Seiten (113) der Verkeileinheit (100) in den Griffabschnitt (120) übergeht.

3. Lüftungsgerät (200) nach Anspruch 1 oder nach Anspruch 2, wobei
- der Keilabschnitt (110) der Verkeileinheit (100) eine oder mehrere Verstärkungsstützen (114) aufweist,
welche von einer Seite des zweiten Paares gegenüberliegender Seiten (113) zu der anderen Seite des zweiten Paares gegenüberliegender Seiten (113) verlaufen, so dass sie das zweite Paar gegenüberliegender Seiten (113) stützen.

4. Lüftungsgerät (200) nach einem der Ansprüche 1 bis 3,
wobei sich eine Längsachse des Griffabschnittes (120) der Verkeileinheit (100) in eine andere Richtung erstreckt als eine Längsachse des Keilabschnittes (110),
wobei die Längsachse des Griffabschnittes (120) der Verkeileinheit (100) vorzugsweise senkrecht auf der Längsachse des Keilabschnittes (110) steht.

5. Lüftungsgerät (200) nach einem der Ansprüche 1 bis 4, wobei ein Dichtungsmaterial (111) in Form von Streifen am zweiten Paar gegenüberliegender Seiten (113) der Verkeileinheit (100) aufgetragen, insbesondere aufgeklebt, ist.

6. Lüftungsgerät (200) nach einem der Ansprüche 1 bis 5 mit
- einem Gehäuse (202), das zwei EPS-Schalen (211, 212) aufweist,
- einem Innenraum-Frischluftanschluss (221) und einem Innenraum-Abluftanschluss (222), welche, bezogen auf eine Längsrichtung des Lüftungsgeräts, beide auf einer Seite angeordnet sind sowie einem Außenraum-Frischluftanschluss (223) und einem Außenraum-Abluftanschluss (224), welche, bezogen auf die Längsrichtung des Lüftungsgeräts, beide auf der gegenüberliegenden Seite angeordnet sind,
- zwei Radiallüftern, (231, 232) welche jeweils in einen Aufnahmeraum (230) innerhalb des Gehäuses aufgenommen und dazu eingerichtet sind, die Frischluft und die Abluft im Gegenstrom durch den Wärmeübertrager (260) zu leiten,
- einem Kondensatablauf (240),
- wenigstens einem Aufnahmeraum (270) für einen Luftfilter (280),
wobei der Innenraum-Frischluftanschluss (221), der Innenraum-Abluftanschluss (222), der Außenraum-Frischluftanschluss (223), der Außenraum-Abluftanschluss (224), die zwei Radiallüfter (231, 232), der Aufnahmeraum (250) für den Wärmeübertrager (260), der Wärmeübertrager (260) und die Verkeileinheit (100) im Wesentlichen in einer Ebene angeordnet sind,
wobei ein Zugriff zur Wartung, insbesondere zur Entnahme, wenigstens auf beide Radiallüfter (231, 232), auf mindestens einen der Aufnahmeräume (250, 270) für den Wärmeübertrager (260) oder den Luftfilter (280), auf einen oder mindestens einen der Luftfilter (280), auf den Wärmeübertrager (260) und auf die Verkeileinheit (100) über die gleiche Seite des Gehäuses ermöglicht ist.

7. Lüftungsgerät (200) nach Anspruch 6, wobei die zwei EPS-Schalen (211, 212) miteinander verklebt sind.

8. Montageverfahren zum Montieren eines Lüftungsgeräts (200) nach einem der Ansprüche 1 bis 7, umfassend die folgenden Schritte:
- Einfügen eines Wärmeübertragers (260) in einen Aufnahmeraum (250) des Lüftungsgeräts (200)
und
- Verkeilen des Wärmeübertragers (260) mit der Verkeileinheit (100) in dem Aufnahmeraum (250) des Lüftungsgeräts (200), sodass sich der Wärmeübertrager (260) in einer Betriebsposition befindet.

9. Demontageverfahren zum Entfernen einer Verkeileinheit (100) aus einem Lüftungsgerät (200) nach einem der Ansprüche 1 bis 7, umfassend die folgenden Schritte:
- Bereitstellen eines Lüftungsgeräts (200), wobei sich ein Wärmeübertrager (260) in einer Betriebsposition befindet,
- zumindest teilweises Entfernen der Verkeileinheit (100) aus dem Lüftungsgerät (200), sodass sich der Wärmeübertrager (260) in einer Entnahmeposition befindet,
und optional
- Entnehmen des Wärmeübertragers (260) aus dem Lüftungsgerät (200).

## Claims

1. A ventilation unit (200), comprising:
- an accommodating space (250) for a heat exchanger (260),
- a heat exchanger (260) disposed in the accommodating space (250), and
- a wedging unit (100),
wherein the heat exchanger (260) is in a removal position in which the heat exchanger (260) is removable when the wedging unit (100) is at least partially removed,
wherein the heat exchanger (260) is in an operating position when the wedging unit (100) is inserted and wedges the heat exchanger (260) inside the accommodating space (250),
wherein the wedging unit (100) includes:
- a wedge portion (110) arranged to mutually wedge the heat exchanger (260) and the ventilation unit (200) such that the heat exchanger (260) is retained in an operating position by the wedging,
and
- a handle portion (120) extending from the upper end of the wedge portion (110) for releasing the wedging unit (100) from the wedging,
wherein the wedge portion (110) has at least two pairs of opposing sides,
- a first pair of opposing sides (112),
and
- a second pair of opposing sides (113) tapering towards the lower end (115) of the wedging unit (100).

2. The ventilation unit (200) according to claim 1,
wherein at least one side of the second pair of opposing sides (113) of the wedging unit (100) transitions into the handle portion (120).

3. The ventilation unit (200) according to claim 1 or claim 2, wherein
- the wedge portion (110) of the wedging unit (100) has one or more reinforcing supports (114)
running from one side of the second pair of opposing sides (113) to the other side of the second pair of opposing sides (113), such that they support the second pair of opposing sides (113).

4. The ventilation unit (200) according to any one of claims 1 to 3,
wherein a longitudinal axis of the handle portion (120) of the wedging unit (100) extends in a different direction than a longitudinal axis of the wedge portion (110),
wherein the longitudinal axis of the handle portion (120) of the wedging unit (100) is preferably perpendicular to the longitudinal axis of the wedge portion (110).

5. The ventilation unit (200) according to any one of claims 1 to 4, wherein a sealing material (111) in the form of strips is applied to the second pair of opposing sides (113) of the wedging unit (100), in particular glued thereto.

6. The ventilation unit (200) according to any one of claims 1 to 5, comprising:
- a casing (202) having two EPS shells (211, 212),
- an indoor fresh air connection (221) and an indoor extract air connection (222), both of which are disposed on one side with respect to a longitudinal direction of the ventilation unit, and an outdoor fresh air connection (223) and an outdoor extract air connection (224), both of which are disposed on the opposite side with respect to the longitudinal direction of the ventilation unit,
- two radial fans (231, 232), each accommodated in an accommodating space (230) within the casing and arranged to route the fresh air and the extract air through the heat exchanger (260) in a countercurrent,
- a condensate drain (240),
- at least one accommodating space (270) for an air filter (280),
wherein the indoor fresh air connection (221), the indoor extract air connection (222), the outdoor fresh air connection (223), the outdoor extract air connection (224), the two radial fans (231, 232), the accommodating space (250) for the heat exchanger (260), the heat exchanger (260) and the wedging unit (100) are substantially disposed in one plane,
wherein access for maintenance is possible, in particular for removal, at least to both radial fans (231, 232), to at least one of the accommodating spaces (250, 270) for the
heat exchanger (260) or the air filter (280), to one or at least one of the air filters (280), to the heat exchanger (260) and to the wedging unit (100) via the same side of the casing.

7. The ventilation unit (200) according to claim 6, wherein the two EPS shells (211, 212) are glued together.

8. An assembly method for assembling a ventilation unit (200) according to any one of claims 1 to 7, including the following steps:
- inserting a heat exchanger (260) into an accommodating space (250) of the ventilation unit (200),
and
- wedging the heat exchanger (260) and the wedging unit (100) inside the accommodating space (250) of the ventilation unit (200) such that the heat exchanger (260) is in an operating position.

9. A disassembly method for removing a wedging unit (100) from a ventilation unit (200) according to any one of claims 1 to 7, including the following steps:
- providing a ventilation unit (200), wherein a heat exchanger (260) is in an operating position,
- at least partially removing the wedging unit (100) from the ventilation unit (200) such that the heat exchanger (260) is in a removal position,
and optionally
- removing the heat exchanger (260) from the ventilation unit (200).

## Revendications

1. Appareil de ventilation (200) comportant :
- un espace de réception (250) destiné à un échangeur de chaleur (260),
- un échangeur de chaleur (260) disposé dans l'espace de réception (250), et
- une unité de calage (100),
dans lequel l'échangeur de chaleur (260) est dans une position de soutirage dans laquelle l'échangeur de chaleur (260) peut être retiré, lorsque l'unité de calage (100) est au moins partiellement retirée,
dans lequel l'échangeur de chaleur (260) est dans une position de fonctionnement lorsque l'unité de calage (100) est insérée et cale l'échangeur de chaleur (260) dans l'espace de réception (250),
dans lequel l'unité de calage (100) comprend :
- une section de calage (110) conçue pour caler l'échangeur de chaleur (260) avec l'appareil de ventilation (200) de telle sorte que l'échangeur de chaleur (260) soit maintenu dans une position de fonctionnement par le calage,
et
- une section de poignée (120) s'étendant depuis l'extrémité supérieure de la section de calage (110) pour libérer l'unité de calage (100) du calage,
dans lequel la section de calage (110) comprend au moins deux paires de côtés opposés,
- une première paire de côtés opposés (112)
et
- une deuxième paire de côtés opposés (113) qui se rétrécit vers l'extrémité inférieure (115) de l'unité de calage (100).

2. Appareil de ventilation (200) selon la revendication 1,
dans lequel au moins un côté de la seconde paire de côtés opposés (113) de l'unité de calage (100) se confond avec la section de poignée (120).

3. Appareil de ventilation (200) selon la revendication 1 ou la revendication 2, dans lequel
- la section de calage (110) de l'unité de calage (100) comprend un ou plusieurs supports de renforcement (114),
qui s'étendent d'un côté de la seconde paire de côtés opposés (113) à l'autre côté de la seconde paire de côtés opposés (113) de manière à supporter la seconde paire de côtés opposés (113).

4. Appareil de ventilation (200) selon l'une des revendications 1 à 3,
dans lequel un axe longitudinal de la section de poignée (120) de l'unité de calage (100) s'étend dans une direction différente d'un axe longitudinal de la section de calage (110), dans lequel l'axe longitudinal de la section de poignée (120) de l'unité de calage (100) étant de préférence perpendiculaire à l'axe longitudinal de la section de calage (110).

5. Appareil de ventilation (200) selon l'une des revendications 1 à 4, dans lequel un matériau d'étanchéité (111) est appliqué, en particulier collé, sous forme de bandes sur la deuxième paire de côtés opposés (113) de l'unité de calage (100).

6. Appareil de ventilation (200) selon l'une des revendications 1 à 5 avec
- un caisson (202) présentant deux coques en EPS (211, 212),
- un raccord air neuf/espace intérieur (221) et un raccord air extrait/espace intérieur (222) qui, par rapport à une direction longitudinale de l'appareil de ventilation, sont tous deux disposés sur un côté, ainsi qu'un raccord air neuf/espace extérieur (223) et un raccord air extrait/espace extérieur (224) qui, par rapport à la direction longitudinale de l'appareil de ventilation, sont tous deux disposés sur le côté opposé,
- deux ventilateurs radiaux (231, 232) respectivement reçus dans un espace de réception (230) situé dans le caisson et conçus pour guider l'air neuf et l'air extrait en écoulement inverse à travers l'échangeur de chaleur (260),
- un écoulement des condensats (240),
- au moins un espace de réception (270) destiné à un filtre à air (280),
dans lequel le raccord d'air neuf intérieur (221), le raccord d'air extrait intérieur (222), le raccord d'air neuf extérieur (223), le raccord d'air extrait extérieur (224), les deux ventilateurs radiaux (231, 232), l'espace de réception (250) pour l'échangeur de chaleur (260), l'échangeur de chaleur (260) et l'unité de calage (100) sont disposés essentiellement dans un plan,
dans lequel un accès pour la maintenance, en particulier pour le soutirage, étant possible au moins sur les deux ventilateurs radiaux (231, 232), sur au moins l'un des espaces de réception (250, 270) pour
l'échangeur de chaleur (260) ou le filtre à air (280), sur un ou au moins un des filtres à air (280), sur l'échangeur de chaleur (260) et sur l'unité de calage (100) par le même côté du caisson.

7. Appareil de ventilation (200) selon la revendication 6, dans lequel les deux coques en EPS (211, 212) sont collés ensemble.

8. Procédé de montage pour monter un appareil de ventilation (200) selon l'une des revendications 1 à 7, comprenant les étapes suivantes :
- Insertion d'un échangeur de chaleur (260) dans un espace de réception (250) de l'appareil de ventilation (200)
et
- Calage de l'échangeur de chaleur (260) avec l'unité de calage (100) dans l'espace de réception (250) de l'appareil de ventilation (200), de sorte que l'échangeur de chaleur (260) se trouve dans une position de fonctionnement.

9. Procédé de démontage pour retirer une unité de calage (100) d'un appareil de ventilation (200) selon l'une des revendications 1 à 7, comprenant les étapes suivantes :
- Fournir un appareil de ventilation (200), dans lequel un échangeur de chaleur (260) est dans une position de fonctionnement,
- Le retrait au moins partiel de l'unité de calage (100) de l'appareil de ventilation (200), de sorte que l'échangeur de chaleur (260) se trouve dans une position de soutirage,
et en option
- Retirer l'échangeur de chaleur (260) de l'appareil de ventilation (200).
